# EUROPEAN PATENT APPLICATION

(11) **EP 4 622 232 A1**
(43) Date of publication of application: **24.09.2025**
(21) Application number: 24168309.3
(22) Date of filing: 03.04.2024
(51) Int. Cl.: H04M 3/51, H04M 3/56

(54) **TELEPHONY SYSTEM AND METHOD OF OPERATING THE SAME**

(30) Priority: 19.03.2024 US 202463567135 P
(71) Applicant: British Telecommunications public limited company, London E1 8EE (GB)
(72) Inventor: GLYNN, F JOSEPH, London, E1 8EE (GB); BATAGURKI, RAJESH, Londen, E1 8EE (GB)
(74) Representative: British Telecommunications public limited company Intellectual Property Department

(57) **Abstract**

A method (300, 400) of operating a telephony system (100), said system comprising a: client server (170), configured to: access a conferencing server (140) for establishing a conference call; connect a plurality of terminals (180) to the conferencing server; and communicate with a UE (160) so as to receive a call from the UE; the method comprising the steps of, by the client server: detecting initiation of a call between the UE and a given one of the plurality of terminals (320, 420); identifying the UE and said given terminal; assessing whether the detected call is a conference call or a non-conference call; in response to assessing that the call is a non-conference call: requesting, from the conferencing server, establishment of a conference call for the identified UE and the given terminal and corresponding to said non-conference call (330-2, 430); receiving, from the conferencing server, access information for accessing the requested conference call (340, 440); and distributing the access information to each of the plurality of terminals (360, 460), thereby permitting any of said terminals to access the conference call.

## Description

### Field of Invention

The present invention relates to a telephony system and a method of operating the same.

### Background

In a service provider-customer environment, multiple agents within a common service providing organisation may need simultaneously to attend the same call with a single customer; this may be permitted by conference calls.

However, an initiator of a call might omit, or not be able, to initiate a call as a conference call, and may instead place a non-conference (or a point-to-point) call. For example, the customer may not have the capability to initiate a conference call with the multiple agents (e.g. due only to having contact details of only one of the agents), and therefore place a non-conference call, which cannot be attended by multiple agents unless a corresponding conference call is established.

Furthermore, conference calls require attendees to be known to, and invited by, the call initiator, which may be unmanageable or laborious for large groups.

Still further, where an operator of a conference calling platform (e.g. Microsoft, Google, Cisco, Meta, and Zoom) provides functionality that ameliorates any of the aforementioned problem, this functionality resides with the operator, and is remote from the organisation, and may therefore be beyond suitable control and customisation of the organisation.

It is an aim of the present invention to alleviate at least some of the aforementioned problems.

### Statements of Invention

According to a first aspect of the present invention, there is provided: a method of operating a telephony system, said system comprising a: client server, configured to: access a conferencing server for establishing a conference call; connect a plurality of terminals to the conferencing server; and communicate with a UE so as to receive a call from the UE; the method comprising the steps of, by the client server: detecting initiation of a call between the UE and a given one of the plurality of terminals; identifying the UE and said given terminal; assessing whether the detected call is a conference call or a non-conference call; in response to assessing that the call is a non-conference call: requesting, from the conferencing server, establishment of a conference call for the identified UE and the given terminal and corresponding to said non-conference call; receiving, from the conferencing server, access information for accessing the requested conference call; and distributing the access information to each of the plurality of terminals, thereby permitting any of said terminals to access the conference call.

Preferably, requesting the conference call comprises instructing the conferencing server to communicate the access information to the identified UE. As used herein, the conference call corresponding with the non-conference call preferably connotes the conference call comprising, at least, the same call parties (i.e. the UE and the given terminal). Optionally, the method further comprises the step of the client server terminating the non-conference call in response to establishment of the conference call. Preferably, at least one of the plurality of terminals, other than the given terminal, is a non-participant of the non-conference call and the requested conference call, but may subsequently participate in the requested conference call by using the access information. Preferably, requesting the conference call comprises providing options for the conference call, including pertaining to: media characteristics; security and privacy; call handling; and/or call management. Optionally, the options are selected in dependence upon identities of the identified terminal and UE.

Preferably, in response to assessing that the call is a conference call, by the client server: receiving access information for said conference call from the conferencing server; and distributing the access information to each of the plurality of terminals.

Preferably, the detected call is initiated by the UE. Preferably, said UE is not a part of the plurality of terminals. Optionally, the client server is configured to permit the call to continue ringing whilst requesting establishment of a conference call. Optionally, the client server is configured to answer the detected call, and subsequently to request, from the conference server, bridging of the answered call into the requested conference call. Preferably, the client server intercepts the detected call and prevents establishment of said call with the given terminal.

Preferably, the detected call is initiated by the given terminal. Preferably, the client server intercepts the detected call, and more preferably prior to, and so as to prevent, establishment of said call between the UE and the given terminal. In this way, the UE may not be notified of the detected call. Preferably, the client server is configured to connect the plurality of terminals with the UE, and wherein in response to detecting that the call is a non-conference call from the given terminal, the client server preventing onward communication of said call to the UE.

Preferably, the client server is configured to connect a superset of terminals to the conferencing server, said superset comprising the plurality of terminals and at least one additional terminal, and the method further comprising the steps of: providing, at the client server, a: first group comprising the plurality of terminals and not the at least one additional terminal; and second group comprising the at least one additional terminal and not the plurality of terminals; and identifying the first group as being associated with the detected call, wherein, in response to said identifying, the access information is distributed to the first group, and not to the second group. Preferably, identifying the first group as being associated with the detected call is performed in dependence upon the identity of the UE and/or the given terminal. Optionally, the client server comprises an association between the identified UE and (optionally, only) the first group, wherein identifying said first group is performed in dependence upon said association. Optionally, the client server comprises an association between the identified given terminal and (optionally, only) the first group, wherein identifying said first group is performed in dependence upon said association. Preferably, the client server is configured to connect the at least one additional terminals to the conferencing server and UE. Optionally, the options for the requested conference call are selected in dependence upon the group that is identified as being associated with the detected call.

Preferably, the method further comprises the steps of: providing, at the client server, a monitoring function for monitoring a status of the conference call; communicating the access information for the conference call to the monitoring function; interrogating, by the monitoring function using the access information, the conferencing server so as to retrieve status information of the conference call; and sharing, by the monitoring function, the retrieved status information with the plurality of terminals. Optionally, the monitoring function is not an attendee of the conference call. Optionally, upon identifying the first group as being associated with the detected call, in response to said identifying, the status information is shared with the first group, and not with the second group. Optionally, the status information comprises a/an: identity and/or details associated with the calling party and/or called party; call start time; call duration; number of attendees; activity indicator, such as indicative of an active and/or on-hold call; identity of the initiator of the call; and/or identity of a currently active (e.g. speaking or presenting) attendee of the call.

Preferably, the sharing of the retrieved status is performed in dependence upon the retrieved status information complying with a pre-defined rule. Optionally, the pre-defined rule comprises an assessment of sufficient privileges by each of the plurality of terminals.

Preferably, the method further comprises a step of the client service detecting participation by the UE in the conference call, and wherein the access information is distributed to, at least, each of the plurality of terminals, other than the given terminal, in response to said detected participation. Optionally, said distributing is performed only in response to detecting said participation.

Preferably, identifying the UE and the given terminal comprises retrieving a unique call address thereof, and wherein requesting establishment of the conference call comprises communicating said call addresses to the conferencing server. Optionally, the method further comprises identifying the UE and/or given terminal as the calling and/or called party, and wherein requesting establishment of the conference call comprises communicating the same to the conferencing server. Preferably, the call addresses may comprise a/an: telephone number; network address; user account profile; agent ID; and/or a user ID. Preferably, requesting establishment of the conference call comprises requesting bridging of the non-conference call into the requested conference call.

According to another aspect of the invention, there is provided a computer-readable carrier medium comprising a computer program, which, when the computer program is executed by a computer, causes the computer to carry out the steps of the aforementioned methods.

According to yet another aspect of the invention, there is provided a telephony system comprising: a plurality of terminals; and a client server comprising: a network interface configured to: access a conferencing server for establishing a conference call; connect the plurality of terminals to the conferencing server; and communicate with a UE so as to receive a call from the UE; and a controller configured to: detect initiation of a call between the UE and a given one of the plurality of terminals; identify the UE and said given terminal; assess whether the detected call is a conference call or a non-conference call; request, from the conferencing server, and in response to assessing that the call is a non-conference call, establishment of a conference call for the identified UE and the given terminal and corresponding to said non-conference call; receive, from the conferencing server, access information for accessing the requested conference call; and distribute the access information to each of the plurality of terminals, thereby permitting any of said terminals to access the conference call.

Preferably, the client server, UE and conferencing server are interconnected by a telecommunications network, which may comprise: a wireless network, including a Wireless Local Area Network; a fixed-access or wired network; a Public Switched Telephone Network (PSTN); a Plain Old Telephone Service (POTS) network; a satellite network; a cellular network (at least, of any standards-defined generation); a HetNet; a network of networks; a broadband network; and/or the Internet. Preferably, the client server is a non-constituent of, and remote from, the conferencing server, UE and/or the telecommunications network.

As used herein, telephony or call preferably includes real-time voice, video, and/or telehaptic communication. As used herein, the term "conference call" preferably connotes a single call capable of simultaneously comprising at least three parties (i.e. where the called and/or calling party comprise at least two members). As used herein, the term "non-conference call" preferably connotes a point-to-point call comprising only one called party and one calling party. Preferably, the client server is an Internet Protocol telephony call handling server, apparatus or system. Preferably, each terminal is an Internet Protocol telephony terminal.

The above summary is not intended to describe each illustrated embodiment or every implementation of the subject matter hereof. The invention includes any novel aspects described and/or illustrated herein. The invention also extends to methods and/or apparatus substantially as herein described and/or as illustrated with reference to the accompanying drawings. The invention is also provided as a computer program and/or a computer program product for carrying out any of the methods described herein and/or for embodying any of the apparatus features described herein, and a computer-readable medium storing thereon a program for carrying out any of the methods and/or for embodying any of the apparatus features described herein. Features described as being implemented in hardware may alternatively be implemented in software, and vice versa.

It should be understood that the individual operations used in the methods of the present teachings may be performed in any order and/or simultaneously, as long as the teaching remains operable. Furthermore, it should be understood that the apparatus and methods of the present teachings can include any number, or all, of the described embodiments, as long as the teaching remains operable.

Any apparatus feature may also be provided as a corresponding step of a method, and vice versa. As used herein, means plus function features may alternatively be expressed in terms of their corresponding structure, for example as a suitably-programmed processor.

Any feature in one aspect of the invention may be applied, in any appropriate combination, to other aspects of the invention. Any, some and/or all features in one aspect can be applied to any, some and/or all features in any other aspect, in any appropriate combination. Particular combinations of the various features described and defined in any aspects of the invention can be implemented and/or supplied and/or used independently.

As used throughout, the word 'or' can be interpreted in the exclusive and/or inclusive sense, unless otherwise specified.

The invention extends to a telephony system and a method of operating the same as described herein and/or substantially as illustrated with reference to the accompanying drawings. The present invention is now described, purely by way of example, with reference to the accompanying diagrammatic drawings, in which:
Figure 1 shows a schematic diagram of a telecommunications system;
Figure 2 shows a detail of the telecommunications system; and
Figure 3 shows a method of operating the telecommunications system.

While various embodiments are amenable to various modifications and alternative forms, specifics thereof have been shown by way of example in the drawings and will be described in detail. It should be understood, however, that the intention is not to limit the claimed inventions to the particular embodiments described. On the contrary, the intention is to cover all modifications, equivalents, and alternatives falling within the spirit and scope of the subject matter as defined by, at least, the claims.

### Specific Description

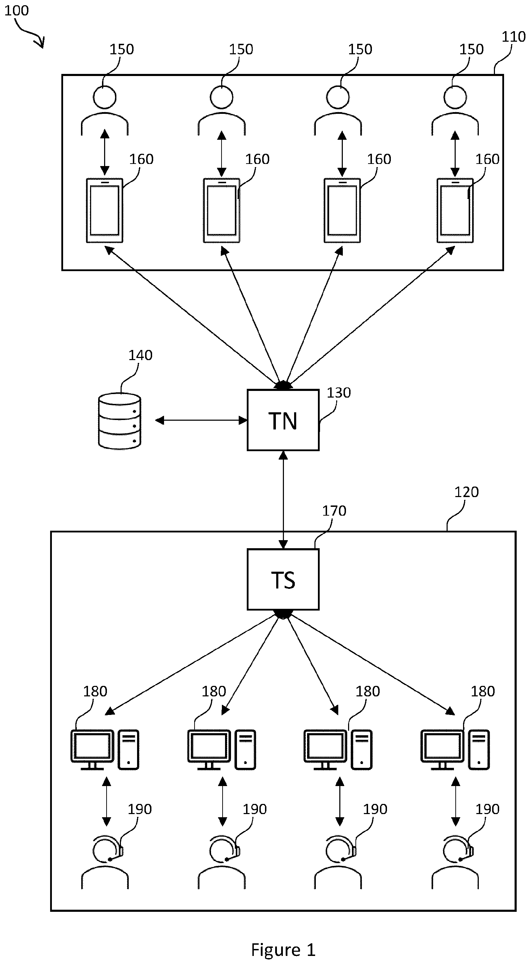

Figure 1 shows a schematic diagram of a telecommunications system 100.

The telecommunications system 100 comprises a: Client Domain (CD) 110; Service Provider (SP) 120; wide-area Telecommunications Network (TN) 130; and Conferencing Server (CS) 140.

The CD 110 comprises a plurality of users 150, typically operating independently, and each associated with a corresponding User Equipment (UE) 160. Each of the UEs is configured to communicate with the TN 130 so as to participate in real-time video and/or audio telecommunication (herein simply *"calls"),* including both conference and non-conference calls. The UEs are telecommunications devices in the form of a: telephone (including a: cellular; smart; landline; and/or; satellite phone); tablet; laptop; and/or PC. Each UE (and, by proxy, the corresponding user) is associated with a unique client identifier for identifying and establishing a call thereto. For example, the client identifier comprises a telephone number, network address, user account profile, and/or a user ID.

The SP 120 comprises a/an: Telephony System (TS) 170; plurality of terminals 180; and a plurality of agents 190.

The SP 120 is a notional singular entity that is operated to provide, by means of the plurality of agents 190 using a corresponding terminal 180, services to the users 150. For example, the SP is a call centre for: customer support and/or enquiries; trading, brokerage and/or order processing; research; and/or marketing.

Each of the terminals 180 is configured to participate in calls, including both conference and non-conference calls, and is operated by a corresponding agent 190. For example, the plurality of terminals are in the form of an IP or Voice-over-Internet-Protocol (VoIP) telecommunications device (e.g. an appropriately configured telephone, tablet, laptop, and/or PC). Each of the terminals is in communication with the TS 170 (for examples by means of a local area network, including an ethernet an/or wireless local area network).

Each terminal 180 (and, by proxy, the corresponding agent 190) is associated with a unique terminal identifier for identifying and establishing a call thereto. For example, the terminal identifier comprises a telephone number, network address, agent account profile, and/or an agent ID.

The TS 170 is a call-handling apparatus that centrally controls call processing for each of the terminals 180. For example, the TS is in the form of a server, on which appropriate call handling software is operated.

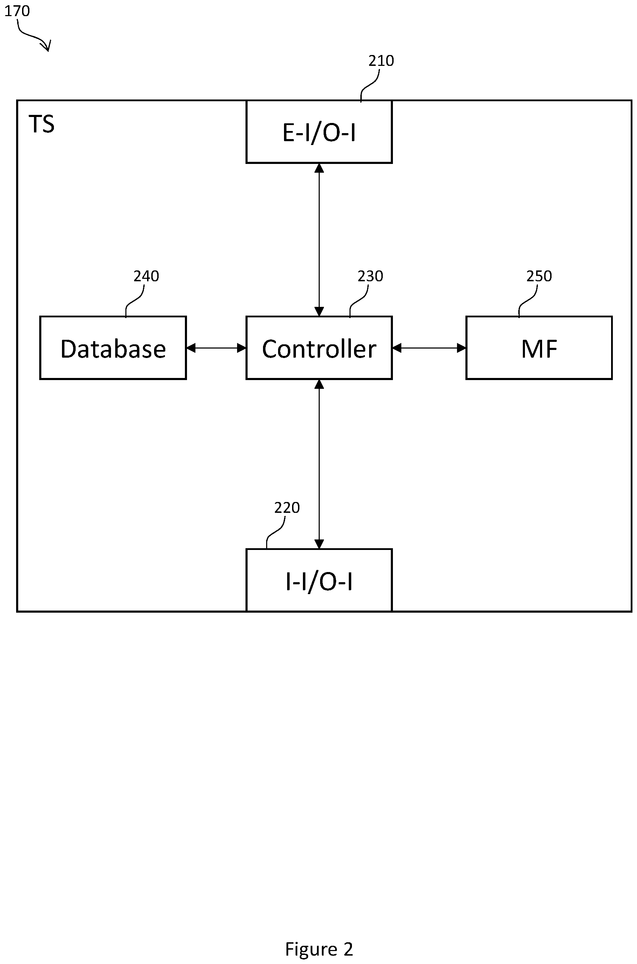

Figure 2 shows the TS 170 in more detail, which comprises a/an: external Input/Output Interface (E-I/O-I) 210; Internal Input/Output Interface (I-I/O-I) 220; controller 230; database 240; and Monitoring Function (MF) 250.

The controller 230 is configured to communicate with each of the E-I/O-I 210, I-I/O-I 220, database 240 and MF 250, and is further configured to perform data processing and communication.

The controller 230 is configured to communicate with the TN 130, and with each of the terminals 180, by means of the E-I/O-I 210, and I-I/O-I 220, respectively, and in particular to intercept outbound and inbound calls from and to, respectively, the terminals. As used herein, an *"outbound call"* refers to a call from the SP 120, by at least one of the terminals 180, to an entity external to the SP, including any one of the UEs 160, whereas an *"inbound call"* connotes the reverse *(e.g.* a call from a UE 160 to the SP 120).

Furthermore, the controller 230 is configured to communicate with the CS 140 *(e.g.* via an appropriate Application Programming Interface, API), at least so as to request establishment of a conference call, and subsequently to receive conference call information from the CS. The conference call information comprises: access information; and status information.

The access information is information that notifies of, identifies, and permits access to, a conference call for the UEs 160 and terminals 180. For example, the access information comprises a: notification, invitation and/or alert of an incoming call; and conference identifier and admission details, such as a meeting ID (or a *"threadID"*), telephone number and/or network address (*e.g.* a URL). Where a conference call is private or secured, such that access is restricted only to authenticated devices and/or users, the access information further comprises access credentials (*e.g.* a PIN, passcode and/or password), encryption key, and/or an access certificate or token. The access information is typically generated by the CS 140.

The status information is indicative of a state of a conference call, in which said state includes a/an: start and/or end time, and/or duration; identifiers of attendees (using, for example, client and/or terminal identifier/s), including past, present and/or potential attendees, a calling party (*i.e.* an initiator of the call), a called party (*i.e.* a recipient of the call), and/or a currently active *(e.g.* speaking or presenting) attendee and/or a host; capabilities and/or restrictions of the conference call *(e.g.* audio, video, whiteboard, muting, capacity limits, *etc.*); and/or activity information, such as indicative of an active and/or on-hold call. Upon receipt of the status information by the controller 230, said information is communicated to the MF 250.

The database 240 comprises memory for storing, at least, grouping information in relation to the terminals 180. The grouping information comprises at least one group, in which each group is associated with at least two terminal identifiers and any number (including zero) of client identifiers that are defined as members of said group.

A group comprises the terminals 180 associated with constituent at least two terminal identifiers, in which allocation to the group is representative of the terminals (and corresponding agents) being associated on the basis of a: team; location; level of permission or privilege; hierarchy; workflow; function; department and/or role. Correspondingly, where a group is associated with at least one client identifier, the UE associated therewith is allocated to the corresponding terminals within the group. In this way, effectively, agents are allocated to specific clients, and said allocation is stored in the database 240.

The groups are available to have any characteristics, as appropriate, including, but not limited to: hierarchal or non-hierarchal structures; overlapping or non-overlapping structures; uniqueness; nesting; inheritability or non-inheritability; and/or define group members inclusively or exclusively.

The TN 130 is configured to facilitate, at least, calls (including circuit-switched and packet-switched calls) between the SP 120 and CD 110 and for permitting access to the CS 140 by the SP and CD.

The TN 130 is therefore available to comprise, or be in the form of, a/an/the: wireless network, including a Wireless Local Area Network; fixed-access or wired network; Public Switched Telephone Network (PSTN); Plain Old Telephone Service (POTS) network; satellite network; cellular network (at least, of any standards-defined generation); HetNet; network of networks; broadband network; and/or Internet.

The CS 140 is configured to establish and host conference calls for participation by any of the terminals 180 and UEs 160 over the TN 130. In this example, the CS is external (or remote) to both the CD 110 and the SP 120 and is operated by a third party. For example, the CS 140 is configured to provide conference call functionality as provided by: *"Microsoft Teams"* from Microsoft Corporation; *"Zoom"* from Zoom Video Communications, Inc; *"Google Meet"* from Google Inc; *"Slack"* from Slack Technologies LLC; *"WhatsApp Messenger"* from Meta Platforms, Inc.; and/or *"Webex"* from Cisco Systems, Inc.

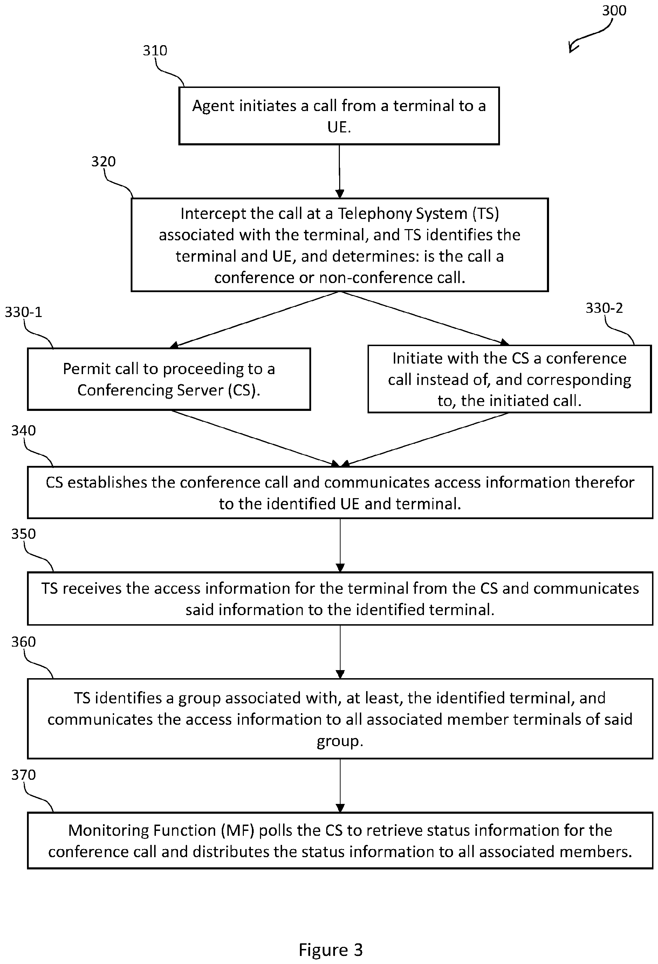

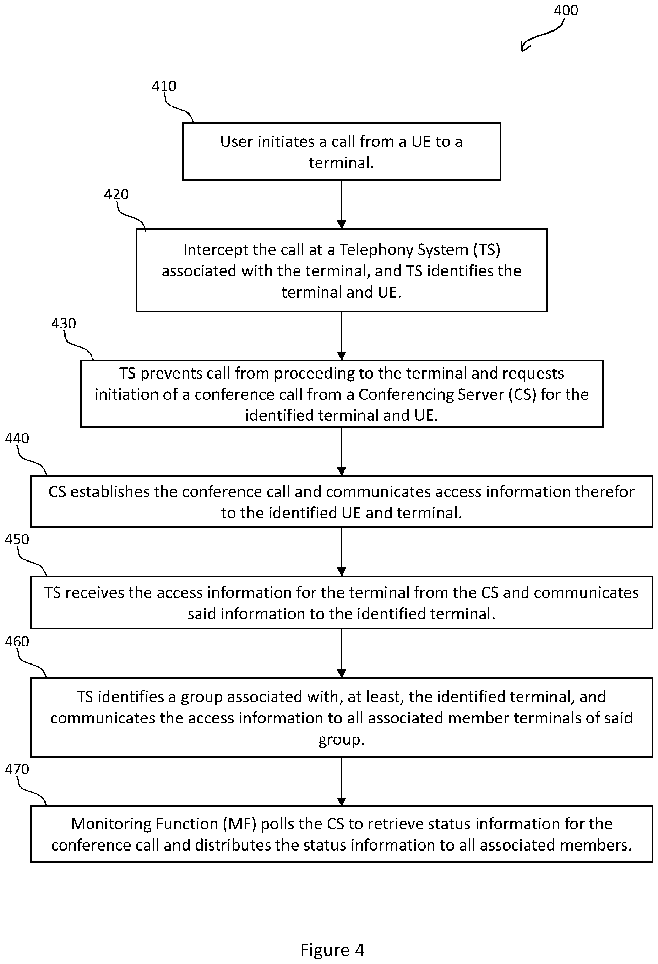

Figures 3 and 4 each show a process of operating the SP 120 so as to provide greater local control of conference calling functionality.

In more detail, Figure 3 shows a process 300 for operating the SP 120 for an outbound call.

In a first step 310, one of the agents 190 initiates a call to a UE 160 (the *"called party"*) using the corresponding terminal 180 (the *"calling party"*), and the initiated call is intercepted by the TS 170 and received by the controller 230 via the I-I/O-I 220. The initiated call comprises the identities of the calling and called parties (collectively, the *"call parties"),* as respective terminal and client identifiers, which the controller retrieves and stores in associated with the initiated call.

At a next step 320, the controller 230 determines whether the initiated call is a conference or non-conference call. For example, the controller identifies the initiated call as a conference call in response to identifying a conference call request addressing the CS 140. The conference call request comprises a/an: instruction to the CS 140 to establish a conference call for the calling party; identifier of the called party so as to receive the conference call (in this process 300, the client identifier); and options for the conference call.

The constituent options for the conference call request pertain, for example, to:
- media characteristics, such as: permitted media for the call (*e.g.* audio, video, screen sharing, whiteboard, polling, chat, captioning or transcription, spatial video, file sharing, remote desktop control, and/or telehaptics, *etc*.); communication protocols and parameters; and media quality;
- security and privacy, such as: call encryption; attendee authentication; attendee listing; geoblocking; attendee blacklisting; waiting room; meeting locking; and/or media recording;
- call handling, such as call holding, forwarding, transfer, termination, and/or merging; and/or
- call management, such as: host selection and identification; attendee admission and/or removal; muting privileges; automatic host transfer; host and attendee capabilities, and/or privileges and permissions to alter any aforementioned option.

It will be appreciated that the specific options that are selected for the conference call are dependent upon compatible capabilities of, at least, the CS, which the TS is configured to determine (*e.g.* via the API).

If, at step 320, the controller 230 determines the initiated call to be a conference call, then process 300 proceeds to step 330-1, wherein the controller permits the conference call request of the initiated outbound conference call to proceed to the CS 140.

At a subsequent step 340, upon receipt of the conference call request, the CS 140 establishes a conference call based on the received (client and terminal) identifiers and the specified options, and generates access information for the conference call.

Once established, the CS 140 communicates, via the TN 130, the generated access information to the TS 170. The access information, as received by the TS, is subsequently forwarded by the TS on to the calling party (terminal) that the controller recorded (at step 320) as being associated with the initiated call, and said terminal is connected to the established conference call using the access information.

The access information is also received by the called party (UE) and alerts of an incoming call and permits access to said incoming call, in which said incoming call is the conference call itself (*e.g.* where the UE has known capability directly to participate in the conference call, such as a UE operating an conferencing application compatible with the CS 140) or is a point-to-point call (*e.g.* using PSTN, VoLTE or VoWiFi) with the CS, which in turn the CS bridges into the conference call (*e.g.* where the UE does not have capability directly to participate in the conference call, such as POTS landline).

At a next step 350, the controller 230 interrogates the database 240 to identify all groups with which the call parties are associated. Upon identifying said groups, the database returns all terminal identifiers, other than that of the calling party, associated with the identified groups; said members are herein referred to as "associated members".

At a next step 360, using the corresponding terminal identifiers, the controller 230 subsequently distributes the access information to the identified associated members. Upon receipt of the access information at each associated member terminal, said terminal displays to the corresponding agent an indication (*e.g.* on a display or indicator of the terminal) of the established conference call along with a corresponding option to connect to said call *(e.g.* a "join" button). In this way, regardless of whether any call party includes an associated member in the initiated call, all associated members are notified of the conference call, and are subsequently made capable, but not forced, to participate in the conference call using the shared access information.

The controller also communicates the access information with the MF 250.

At a subsequent step 370, the MF requests (by operation of the controller 230, and via output from the E-I/O-I 210), from the CS 140, status information of the established conference call. In response, the CS 140 subsequently registers the MF 250 as a subscriber for the status information, and the CS pushes the status information to the TS 170, which is routed to the MF for storage, and is subsequently communicated by the controller to, at least, the associated members in association with the displayed conference call. In this way, the associated members are capable of observing the status of the call without having to attend, thereby providing greater detail for aiding the associated members to determine whether or not to join the conference call (*e.g.* based on elapsed duration and/or attendees).

Returning to step 320, if a determination is instead made that the initiated call is not a conference call, then the process 300 proceeds to step 330-2, wherein the controller 230 prevents onward communication of the initiated call. Instead, the TS 130 requests establishment of a conference call for the call parties. To do so, the TS 130 generates a conference call request using the terminal and client identifiers associated with the initiated call. The conference call request is subsequently communicated by the TS to the CS, via the TN, and the conference call is established in the same manner as described with reference to step 340 above. The TS is configured either to allow the inbound initiated call to continue ringing whilst awaiting establishment of the conference call, or is configured to answer the call and to request bridging of the answered call into the requested conference call.

In this way, the TS effectively replaces a non-conference call with a corresponding conference call, and therefore ensures that an outbound call is (subject to an override) always a conference call. After step 330-2, and from ensuing steps 340 onwards, the process proceeds with the replacement conference call.

Figure 4 is a process for operating the SP for an inbound call.

In a first step 410, one of the users 150 initiates a non-conference call, from the corresponding UE 160 (now the *"calling party"* for this process 400), to the SP, via the TN 130, and received by the TS 170.

The calling party is available to call a specific terminal 180 directly, or to call the SP 120 generically, in which case, by means of appropriate call handling by the TS, a specific terminal 180 is selected (*e.g.* based on a group mapping in the database 240 between the client identifier of the calling party to an available terminal) to receive the call; this specific terminal is the called party for process 400.

At a next step 420, the initiated call is received by the TS 170, and specifically by the controller 230 via the E-I/O-I 210. The controller 230 identifies the initiated call as an inbound non-conference call, and identifies the call parties by retrieving the associated client and terminal identifiers.

At a next step 430, to prevent establishment of a point-to-point call, the TS 170 prevents onward communication and connection of the initiated call to the called party (*e.g.* the initiated call remains in a ringing state from the perspective of the calling party or is answered by the TS). Instead, the controller 230 generates a conference call request for establishing a conference call using the client and terminal identifiers. The controller 230 subsequently communicates the conference call request to the CS 140.

At a next step 440, upon receipt of the conference call request, the CS 140 establishes a conference call for the call parties, and communicates, via the TN 130, access information (in a corresponding manner as in step 340 of process 300) for the established conference call to the call parties using the client and terminal identifiers.

The CS communicates the access information to the calling (UE) party in a corresponding manner to that described in relation to step 340. Upon receipt of the access information and acceptance of the conference call by the UE (said acceptance being performed manually by the associated user or automatically by appropriate software operating on the UE), the UE is connected to the established conference call. Thereafter, the original inbound call is effectively terminated.

At a next step 450, upon receipt of the access information by the TS, the controller 230 forwards the access information to the called (terminal) party. Upon acceptance of the conference call, the terminal is also connected to the established conference call.

In this way, the call parties are connected via a conference call, rather than the original non-conference call; this permits subsequent attendance by the associated members.

Process 400 proceeds to subsequent step 460 and then step 470, which correspond with steps 360 and 370, respectively, of process 300.

### Alternatives and Modifications

It will be appreciated that steps 370 and 470 are available to be performed at any point after the TS 170 receives the access information for the established conference call, and therefore, at least, contemporaneously with steps 350 and 450.

Where step/s 370 and/or 470 coincide with step/s 350 and 450, steps 360 and 460 are only performed in response to the TS 170 determining, by operation of the MF 250, attendance by the called and/or calling party. In this way, alerting of a conference call to the associated members is only performed once the called party accepts and joins the conference call, thereby preventing agents 190 from being notified of attempted, but failed, calls.

In one embodiment, the system and/or its components or subsystems can include computing devices, microprocessors, modules and other computer or computing devices, which can be any programmable device that accepts digital data as input, is configured to process the input according to instructions or algorithms, and provides results as outputs. In one embodiment, computing and other such devices discussed herein can be, comprise, contain or be coupled to a Central Processing Unit (CPU) configured to carry out the instructions of a computer program. Computing and other such devices discussed herein are therefore configured to perform basic arithmetical, logical, and input/output operations.

Computing and other devices discussed herein can include memory. Memory can comprise volatile or non-volatile memory as required by the coupled computing device or processor to not only provide space to execute the instructions or algorithms, but to provide the space to store the instructions themselves. In one embodiment, volatile memory can include random access memory (RAM), dynamic random access memory (DRAM), or static random access memory (SRAM), for example. In one embodiment, non-volatile memory can include read-only memory, flash memory, ferroelectric RAM, hard disk, floppy disk, magnetic tape, or optical disc storage, for example. The foregoing lists in no way limit the type of memory that can be used, as these embodiments are given only by way of example and are not intended to limit the scope of the disclosure.

In one embodiment, the system or components thereof can comprise or include various modules or engines, each of which is constructed, programmed, configured, or otherwise adapted to autonomously carry out a function or set of functions. The term "engine" as used herein is defined as a real-world device, component, or arrangement of components implemented using hardware, such as by an application specific integrated circuit (ASIC) or field programmable gate array (FPGA), for example, or as a combination of hardware and software, such as by a microprocessor system and a set of program instructions that adapt the engine to implement the particular functionality, which (while being executed) transform the microprocessor system into a special-purpose device. An engine can also be implemented as a combination of the two, with certain functions facilitated by hardware alone, and other functions facilitated by a combination of hardware and software. In certain implementations, at least a portion, and in some cases, all, of an engine can be executed on the processor(s) of one or more computing platforms that are made up of hardware (e.g., one or more processors, data storage devices such as memory or drive storage, input/output facilities such as network interface devices, video devices, keyboard, mouse or touchscreen devices, etc.) that execute an operating system, system programs, and application programs, while also implementing the engine using multitasking, multithreading, distributed (e.g., cluster, peer-peer, cloud, etc.) processing where appropriate, or other such techniques. Accordingly, each engine can be realized in a variety of physically realizable configurations, and should generally not be limited to any particular implementation exemplified herein, unless such limitations are expressly called out. In addition, an engine can itself be composed of more than one sub-engines, each of which can be regarded as an engine in its own right. Moreover, in the embodiments described herein, each of the various engines corresponds to a defined autonomous functionality; however, it should be understood that in other contemplated embodiments, each functionality can be distributed to more than one engine. Likewise, in other contemplated embodiments, multiple defined functionalities may be implemented by a single engine that performs those multiple functions, possibly alongside other functions, or distributed differently among a set of engines than specifically illustrated in the examples herein.

Various embodiments of systems, devices, and methods have been described herein. These embodiments are given only by way of example and are not intended to limit the scope of the claimed inventions. It should be appreciated, moreover, that the various features of the embodiments that have been described may be combined in various ways to produce numerous additional embodiments. Moreover, while various materials, dimensions, shapes, configurations and locations, etc. have been described for use with disclosed embodiments, others besides those disclosed may be utilized without exceeding the scope of the claimed inventions.

Persons of ordinary skill in the relevant arts will recognise that embodiments may comprise fewer features than illustrated in any individual embodiment described above. The embodiments described herein are not meant to be an exhaustive presentation of the ways in which the various features may be combined. Accordingly, the embodiments are not mutually exclusive combinations of features; rather, embodiments can comprise a combination of different individual features selected from different individual embodiments, as understood by persons of ordinary skill in the art. Moreover, elements described with respect to one embodiment can be implemented in other embodiments even when not described in such embodiments unless otherwise noted. Although a dependent claim may refer in the claims to a specific combination with one or more other claims, other embodiments can also include a combination of the dependent claim with the subject matter of each other dependent claim or a combination of one or more features with other dependent or independent claims. Such combinations are proposed herein unless it is stated that a specific combination is not intended. Furthermore, it is intended also to include features of a claim in any other independent claim even if this claim is not directly made dependent to the independent claim.

Moreover, reference in the specification to "one embodiment," "an embodiment," or "some embodiments" means that a particular feature, structure, or characteristic, described in connection with the embodiment, is included in at least one embodiment of the teaching. The appearances of the phrase "in one embodiment" in various places in the specification are not necessarily all referring to the same embodiment.

Any incorporation by reference of documents above is limited such that no subject matter is incorporated that is contrary to the explicit disclosure herein. Any incorporation by reference of documents above is further limited such that no claims included in the documents are incorporated by reference herein. Any incorporation by reference of documents above is yet further limited such that any definitions provided in the documents are not incorporated by reference herein unless expressly included herein.

Each feature disclosed herein, and (where appropriate) as part of the claims and drawings may be provided independently or in any appropriate combination.

Any reference numerals appearing in the claims are for illustration only and shall not limit the scope of the claims.

## Claims

1. A method of operating a telephony system, said system comprising a:
client server, configured to:
access a conferencing server for establishing a conference call;
connect a plurality of terminals to the conferencing server; and
communicate with a UE so as to receive a call from the UE;
the method comprising the steps of, by the client server:
detecting initiation of a call between the UE and a given one of the plurality of terminals;
identifying the UE and said given terminal;
assessing whether the detected call is a conference call or a non-conference call;
in response to assessing that the call is a non-conference call:
requesting, from the conferencing server, establishment of a conference call for the identified UE and the given terminal and corresponding to said non-conference call;
receiving, from the conferencing server, access information for accessing the requested conference call; and
distributing the access information to each of the plurality of terminals, thereby permitting any of said terminals to access the conference call.

2. A method according to Claim 1, wherein in response to assessing that the call is a conference call, by the client server: receiving access information for said conference call from the conferencing server; and distributing the access information to each of the plurality of terminals.

3. A method according to Claim 1 or 2, wherein the detected call is initiated by the UE.

4. A method according to Claim 1 or 2, wherein the detected call is initiated by the given terminal.

5. A method according to any preceding claim, wherein the client server is configured to connect a superset of terminals to the conferencing server, said superset comprising the plurality of terminals and at least one additional terminal, and the method further comprising the steps of:
providing, at the client server, a:
first group comprising the plurality of terminals and not the at least one additional terminal; and
second group comprising the at least one additional terminal and not the plurality of terminals; and
identifying the first group as being associated with the detected call, wherein, in response to said identifying, the access information is distributed to the first group, and not to the second group.

6. A method according to any preceding claim, further comprising the steps of:
providing, at the client server, a monitoring function for monitoring a status of the conference call;
communicating the access information for the conference call to the monitoring function; interrogating, by the monitoring function using the access information, the conferencing server so as to retrieve status information of the conference call; and
sharing, by the monitoring function, the retrieved status information with the plurality of terminals.

7. A method according to Claim 6, wherein the sharing of the retrieved status is performed in dependence upon the retrieved status information complying with a pre-defined rule.

8. A method according to any preceding claim, further comprising a step of the client service detecting participation by the UE in the conference call, and wherein the access information is distributed to, at least, each of the plurality of terminals, other than the given terminal, in response to said detected participation.

9. A method according to any preceding claim, wherein identifying the UE and the given terminal comprises retrieving a unique call address thereof, and wherein requesting establishment of the conference call comprises communicating said call addresses to the conferencing server.

10. A method according to any preceding claim, wherein requesting establishment of the conference call comprises requesting bridging of the non-conference call into the requested conference call.

11. A computer-readable carrier medium comprising a computer program, which, when the computer program is executed by a computer, causes the computer to carry out the steps of any one of the preceding claims.

12. A telephony system comprising:
a plurality of terminals; and
a client server comprising:
a network interface configured to:
access a conferencing server for establishing a conference call;
connect the plurality of terminals to the conferencing server; and
communicate with a UE so as to receive a call from the UE; and
a controller configured to:
detect initiation of a call between the UE and a given one of the plurality of terminals;
identify the UE and said given terminal;
assess whether the detected call is a conference call or a non-conference call;
request, from the conferencing server, and in response to assessing that the call is a non-conference call, establishment of a conference call for the identified UE and the given terminal and corresponding to said non-conference call;
receive, from the conferencing server, access information for accessing the requested conference call; and
distribute the access information to each of the plurality of terminals, thereby permitting any of said terminals to access the conference call.
